# EUROPEAN PATENT SPECIFICATION

(11) **EP 1 714 828 B1**
(45) Date of publication and mention of the grant of the patent: **21.10.2009**
(21) Application number: 06112338.6
(22) Date of filing: 06.04.2006
(51) Int. Cl.: B60P 1/28, B60P 1/26, B60P 1/16

(54) **Tipping body structure for goods transportation vehicles**
Kippeinrichtung für einen Lastkraftwagen
Structure basculante pour un camion

(30) Priority: 22.04.2005 IT BO20050278
(43) Date of publication of application: 25.10.2006
(73) Proprietor: EMILCAMION S.r.l., 40050 Argelato (Bologna) (IT)
(72) Inventor: Bettini, Marco, 40010 Bentivoglio (Bologna) (IT)
(74) Representative: Lanzoni, Luciano

(56) References cited:
- EP-A- 0 434 880
- WO-A-03/104022
- DE-A1- 2 444 082
- GB-A- 505 513
- US-A- 2 856 232

## Description

The present invention relates to a tipping body structure for goods transportation and earth moving vehicles such as tipping lorries, tipping trailers and semi-trailers and similar vehicles.

More particularly, the invention relates to a tipping body structure of the type known as a self-supporting tub body.

As is known, the tubs are characterised by a structure with a polygonal cross-section, similar in structural terms to a curved shell, which has many advantages because of its lightness compared with conventional bodies and the consequent possibility of loading greater quantities of material.

These advantages are due to the fact that in the presence of a load the side walls of the tubs, due to their curvature, are mainly subjected to traction stress rather than the bending stress affecting the conventional flat walls of bodies.

Consequently, there is no need for the sheet metal to be too thick or for the use of stiffeners such as vertical ribbing which make the structure heavy and less economical.

However, these known tub structures have the disadvantage of not allowing side tipping.

It is known from document EP-A-0434880 an handling device comprising, arranged transversely relative to the longitudinal axis of the vehicle frame and in the middle part of this frame, a primary arm interposed between said frame and the load, which arm is on the one hand, at one of its ends, articulated about a longitudinal axle positioned along the edge of said vehicle or of the trailer, and, at the other end, equipped with a support intended for receiving means for lifting said load which, interacting with the tilt of the primary arm, make it possible to deposit said load at the side of the vehicle or of the trailer and, by the operation in reverse, to pick up this load.

A first aim of the present invention is therefore to overcome the disadvantages of the known type of tub bodies by proposing a side tipping tub body structure which is very reliable and safe for the operator.

It was also found that in the conventional three-sided tipping systems (rear and right/left side) conventional use of lifting cylinders positioned under the body in a roughly central position and eccentric relative to the centre of gravity has several disadvantages due to the instability of the unloading operation and the strong stresses and deformations to which the body is subjected, which may constitute a risk for the hold of the conventional hooks used to close the side panels. Therefore, another aim of the present invention is to propose, thanks to positioning of the lifting cylinder in front of the body, a very reliable lifting system with every type of body, particularly in combination with tub bodies.

It is also known that the structures of a body on a lorry are mounted on sub-frames which in turn must be fixed to the vehicle chassis.

At present, for every type of chassis there must be a suitable sub-frame, fitted during production with the fixing joints in the appropriate positions and with the appropriate dimensions.

This disadvantage increases the cost of production and results in greater supply difficulties, as well as preventing the use of the same body structure on different types of vehicles.

Therefore, another aim of the invention is to propose a body structure with a "universal" sub-frame which can be adapted to different types of chassis.

The technical purpose indicated and the aims specified are substantially achieved by a body structure comprising the technical characteristics described in one or more of the claims herein.

Further characteristics and advantages of the present invention are more apparent in the detailed description below, with reference to a preferred, non-limiting, embodiment of the invention, illustrated in the accompanying drawings, in which:
- Figure 1 is a perspective view of a body structure in accordance with the present invention in a right side tipping configuration;
- Figure 2 shows the structure illustrated in Figure 1 in a rear tipping configuration;
- Figures 3a and 3b are rear views of the structure illustrated in Figure 1, respectively in a left and right tipping configuration;
- Figure 4 is a partial rear view of a structure in accordance with the present invention with some parts removed for clarity;
- Figure 5 is a partial left side view of a structure in accordance with the present invention with some parts removed for clarity;
- Figure 6 shows a detail of the cross-section C - C from Figure 5;
- Figure 7 is a side view of a bolt for closing the side panels in accordance with the present invention;
- Figure 8 is a top view of cross-section A - A from Figure 7;
- Figure 9 is a front view of the bolt illustrated in Figure 7;
- Figure 10 is a partial left side view of a structure in accordance with the present invention, showing the position of a bolt like that in Figure 7 in the closed configuration;
- Figure 11 is a partial left side view of a structure in accordance with the present invention, showing the position of a bolt like that in Figure 7 in the open configuration;
- Figure 12 is a cross-section according to line B - B from Figure 10;
- Figure 13 is a cross-section according to line D - D from Figure 11;
- Figure 14 is an exploded view of a sub-frame in accordance with the present invention;
- Figures 15, 16, 17 are respectively a side view, a front view and a perspective view of a fixing plate fitted on the sub-frame illustrated in Figure 14;
- Figure 17 is a schematic top view of the side bolt closing device in accordance with the present invention.

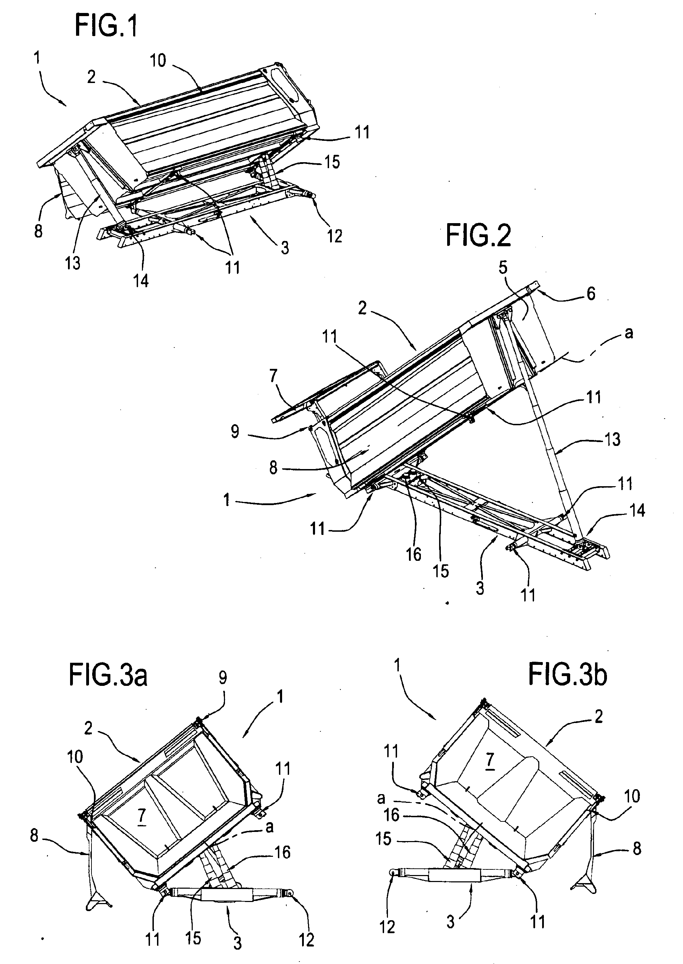

With reference to Figures 1 to 3b, a tub body structure 1 in accordance with the invention is schematically illustrated.

The structure comprises a body, generally labelled 2 and a sub-frame generally labelled 3.

The body consists of a rectangular bed 4 which extends longitudinally, from which a fixed front wall 5 emerges.

The top of the body 2 is closed by a section bar 6 which runs along the entire upper perimeter of the body.

At the rear and sides of the bed 4 there is a rear panel 7 and side panels 8 which can swing open (forced by actuators 23 if necessary) and are hinged to the section bar 6 by respective joint pins 9, 10 of the known type and therefore not described in detail.

The body 2 is connected to the sub-frame 3 by pairs of male/female rotary pins 11 and ball pins 12, positioned below the body at the sides and at the rear panel 7 and which may be inserted or removed depending on the direction of tipping.

The position and configuration of the pins 11/12 and the methods for insertion/removal of the appropriate pairs of pins is part of the prior art and therefore is not described in detail.

In the case of rear tipping (Figure 2) the rear pins 11 are inserted and the body is lifted by an actuator cylinder 13 acting between the sub-frame 3 and a point of the front part 5 of the body.

In cases of left/right side tipping (Figures 1, 3a, 3b) the corresponding left/right side pins 11/12 are inserted and the body is lifted by the same cylinder 13 and if necessary by a pair of auxiliary cylinders 15, 16 acting between the sub-frame 3 and two lower points of the bed 4 at the rear of the latter and off centre relative to the central longitudinal axis "a" of the bed.

The auxiliary cylinders 15, 16 are preferably multi-section cylinders which slide out, their length such that in the home position they can be retracted within the height of the sub-frame 3.

It should be noticed that to allow both rear and side tipping the cylinder 13 has a universal joint 14 able to make the cylinder rotate both in a sub-frame longitudinal plane (rear tipping) and in a sub-frame transversal plane (side tipping).

It must be emphasised that in accordance with the invention sensors are used which can detect insertion of the side pins 11 and enable the auxiliary cylinders only when the side pins are correctly inserted, to increase the safety of the unloading operation.

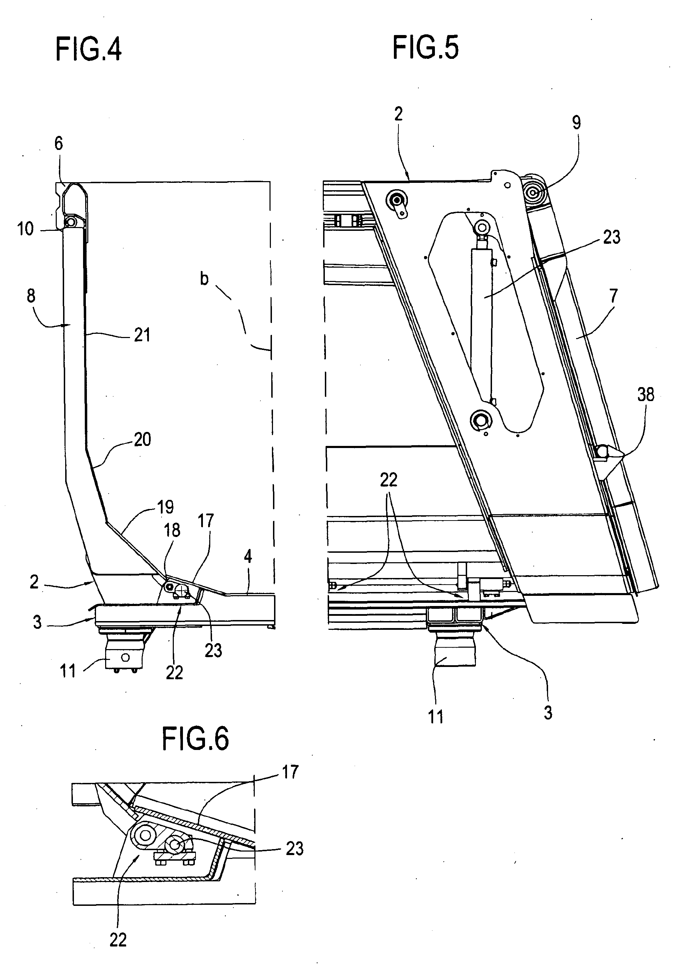

Figure 4 shows the left side wall 8 of the body 2, although it shall be understood that the right side wall 8 mirrors the same configuration.

In the embodiment described, the panel 8 comprises an angled section 17, the bottom of which is adjacent to the bed 4 and the top of which is adjacent to a second angled section 19, continuing upwards with another angled section 20 and then a vertical section 21 which ends with the upper joint pins 10 for connection to the section bar 6.

The succession of angled sections 17, 19, 20 is indicated here as an embodiment of a tub body, characterised by a polygonal shape which, from a structural and tensile behaviour viewpoint, has the shape of a curved shell. However, it shall be understood that the panels 8 may have different polygonal configurations.

According to the invention the side panels 8 can open along an opening line 18, preferably positioned between the first and the second angled sections 17, 19, but it shall be understood that the panels 8 may open along different longitudinal lines, for example positioned between the bed 4 and the first angled section 17 or between the second and the third angled sections 19, 20.

At the opening line 18 there are also locking/release means to connect the panels 8 to the bed 4 on command, generally labelled 22.

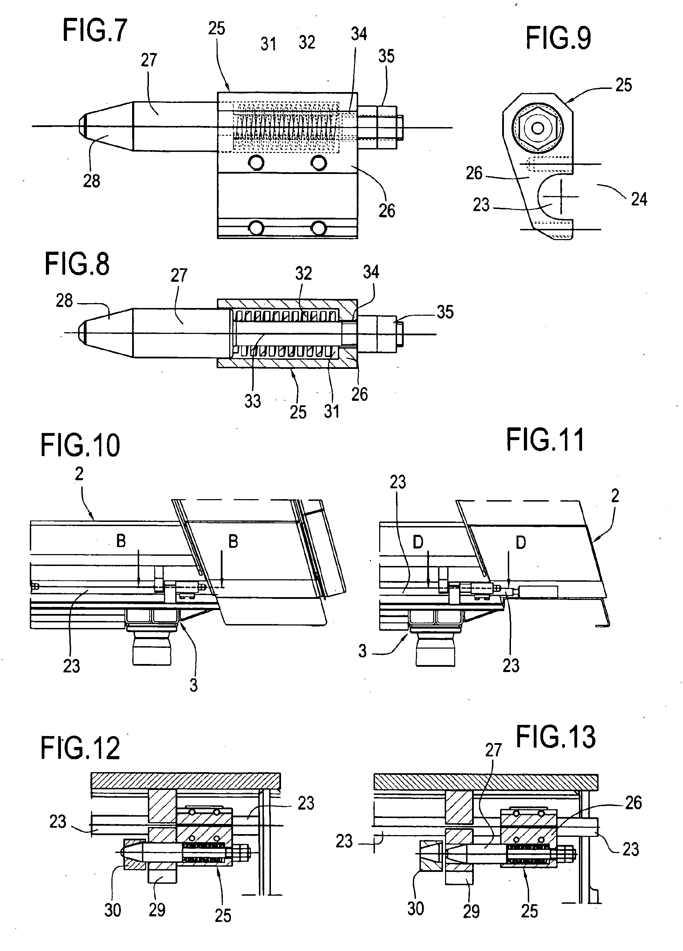

In greater detail, and with reference to Figures 7 to 13, the locking/release means 22 consist of a longitudinal rod 23 which runs along the opening line 18 and can be operated longitudinally, manually or using linear actuators (not illustrated).

Along the rod 23, fixed using clamps 24, there is a succession of bolts 25 distributed with predetermined spacing along the entire length of the panel 8.

In the example described, the bolts 25 have a plate 26 for fixing to the rod 23 and a sliding bar 27 preferably with a tapered end, which in practice can pass through a first sleeve 29 integral with the bed 4 and a second sleeve 30 integral with the panel 8.

Advantageously, the inside of the second sleeve 30 has the shape of a truncated cone to facilitate on one hand bar insertion without play (Figures 10, 12) and, on the other hand, removal of the tapered end 28 (Figures 11, 13) even under high transversal load conditions due to the pressure of the material transported on the panel.

In a preferred embodiment, the sliding bar 27 can slide in a circular seat 31 made in the plate 26, against the action of an opposing spring 32 positioned around a stem 33 with a suitably reduced diameter and which in turn slides in a hole 34 in the end wall of the seat 31, having a double stop nut 35 at its free end.

Advantageously, one or more of the bolts 25 has a sliding bar 27 pushed by the spring 32 in such a way as to avoid excessive forcing on the sleeves 30 when closing the panel 8 and to allow spontaneous sliding bar insertion once fixed sleeve 29 and mobile sleeve 30 alignment is complete. In other bolts the spring 32 may be substituted by a rigid spacer which makes the movement of the sliding bar 27 absolutely integral with that of the longitudinal rod.

It must be emphasised that the distributed structure of the bolts along the same longitudinal rod and on numerous connecting points 30 for the panel means that, when the panel is closed, panel 8 continuity relative to the tensile traction state typical of the tub body can be restored.

Moreover, the longitudinal movement of the bolts makes closing safe and reliable even relative to possible deformations of the structure during transportation or rear tipping with the side panels closed.

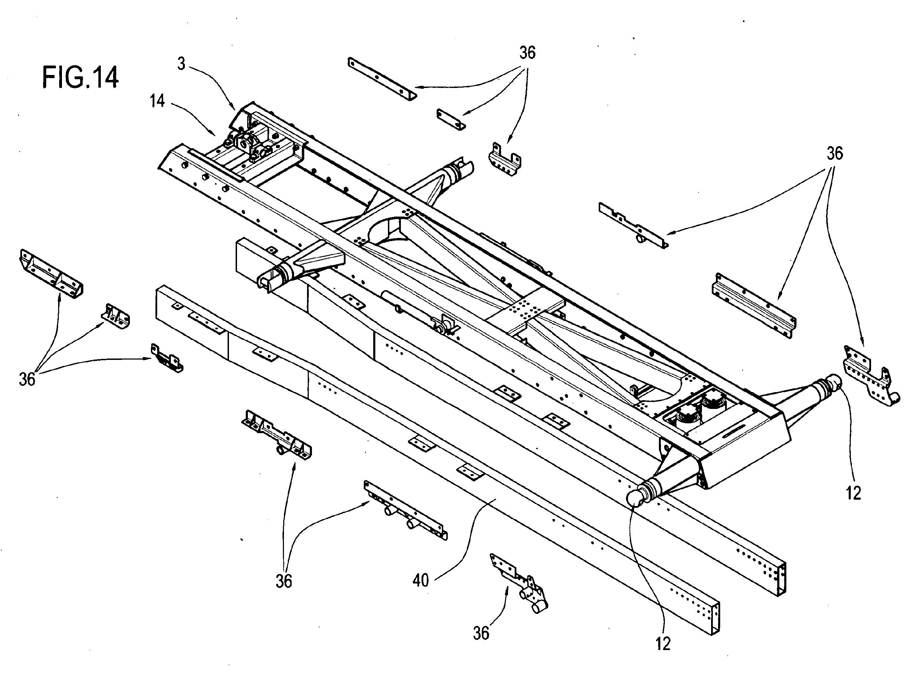

Figure 14 shows a sub-frame in accordance with the invention, in an exploded configuration and highlighting adapter plates 36 for fixing the sub-frame 3 to a vehicle chassis 40.

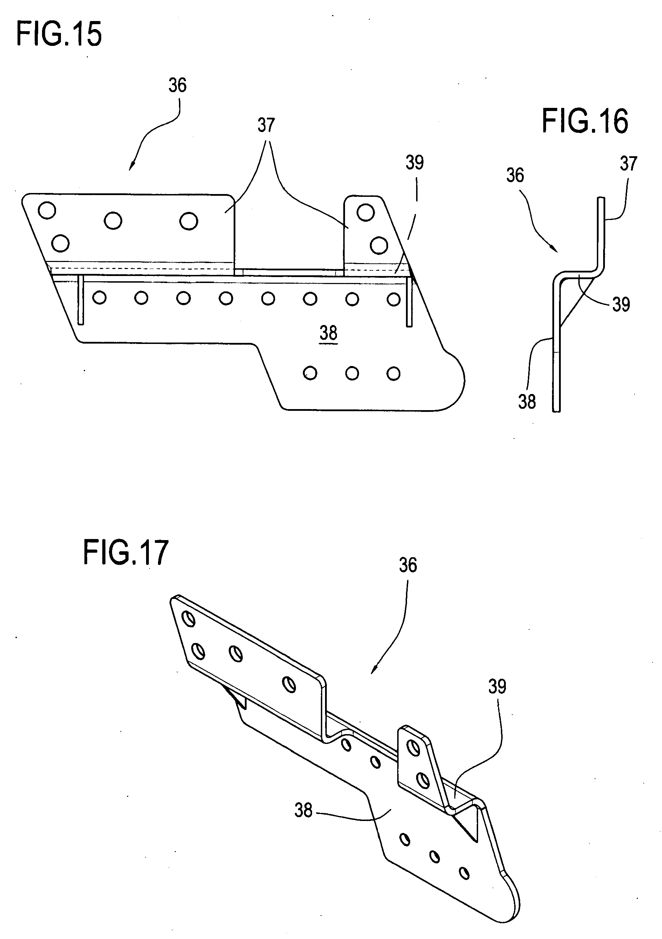

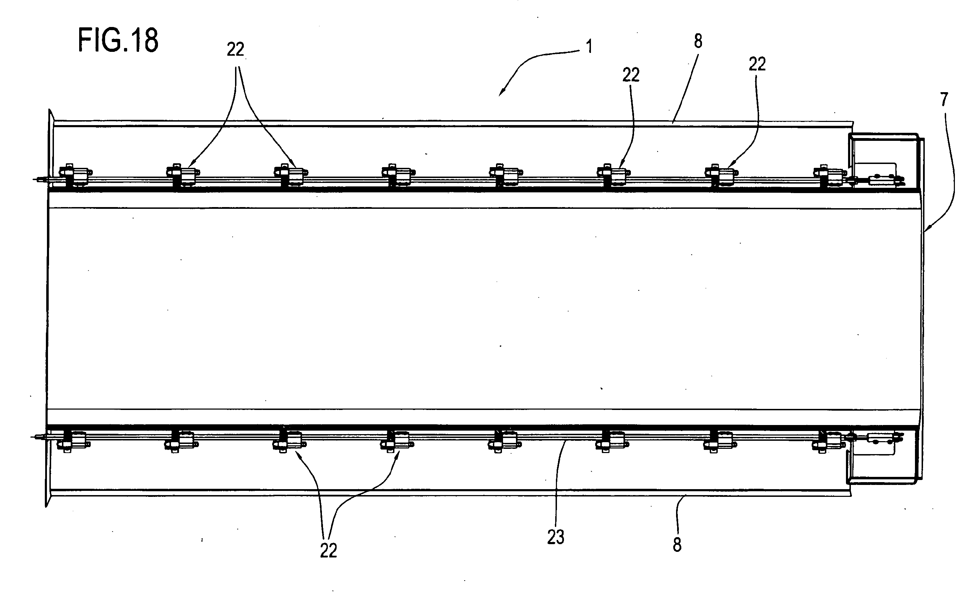

In more detail, Figures 15 to 17 show an adapter plate 36, comprising a section 37 for fixing (for example using bolts) to the sub-frame 3, a section 38 for fixing to the vehicle chassis, and a connecting section 39 with dimensions which depend on the chassis of the vehicle on which it must be fitted.

Advantageously, the sub-frame disclosed, thanks to the adapter plates supplied for the purpose, allows a "universal" sub-frame structure to be adapted to any vehicle chassis with known dimensions.

The invention described has evident industrial applications and may be modified and adapted without thereby departing from the scope of the inventive concept. Moreover, all details of the invention may be substituted by technically equivalent elements.

## Claims

1. A tipping body structure (1) for goods transportation vehicles, comprising:
- a bed (4) extending longitudinally, substantially at a right angle to an axis of elevation (b) of the body (2) and equipped with rear tipping pins (12) positioned at the rear of the bed and side tipping pins (11) positioned at least at a longitudinal side of the bed
- a front wall (5) integral with the bed and substantially parallel with the axis of elevation;
- side panels (8), each comprising a first section (17) adjacent to the bed (4) and angled upwards relative to it and at least a second section (19) adjacent and angled upwards relative to the first section;
- a rear wall (7) substantially parallel with the axis of elevation;
- first lifting means (13) acting between a lower fixed point and a point of the body (2) positioned in front of the front wall;
- second lifting means (13, 15, 16) operating between a fixed point of the vehicle and at least one point of the body positioned inside the bed (4) relative to the side tipping pins (11),
at least one of the side panels (8) being hinged on the upper pins (10) and able to swing open relative to the bed (4) using locking/release means (22) positioned at a longitudinal opening axis (18) below the upper joint pins (10), the rear wall (7) being hinged on upper pins (9) and able to swing open relative to the bed and the side panels thanks to locking/release means (38); **characterised in that** the structure comprises a sub-frame (3) which supports the bed (4), equipped with at least a bed rear tipping pins (12) and comprising means (36) for stably fixing it to the chassis (40) of a vehicle; the second lifting means (15, 16) consisting of at least one hydraulic cylinder positioned under and close to the rear of the bed (4), off centre relative to the central longitudinal axis (a) of the bed and being cylinders which slide out, retracted inside the vertical dimension of the sub-frame (3).

2. The structure according to claim 1, wherein the side panel (8) locking/release means (22) have a longitudinal locking/release movement.

3. The structure according to claim 2, wherein the locking/release means comprise one or more bolts (25) operated by a longitudinal control rod (23) so that on command they pass through first and second seats (29, 30) respectively integral with the bed (4) and with the panels (8).

4. The structure according to claim 3, wherein the bolts have a sliding bar (27) with a tapered end (28) to facilitate insertion in and removal from corresponding seats (30) which have a truncated cone shaped cross-section.

5. The structure according to claim 3 or 4, wherein one or more of the bolts (25) can slide in a sliding seat (31) against the action of an opposing spring (32).

6. The structure according to any of the foregoing claims, wherein the opening axis of the side panels (18) is between two adjacent angled sections (17, 19) of the side panel (8).

7. The structure according to any of the foregoing claims, wherein in the closed configuration the lower side section (17) overlaps the adjacent upper side section (19) along the opening axis (18), guaranteeing the body seal for the material transported.

8. The structure according to any of the foregoing claims, wherein the first lifting means (13) consist of at least one hydraulic cylinder positioned in front of the body (2).

9. The structure according to claim 1, wherein the fixing means (36) comprise adapter plates consisting of a section (37) for fixing to the sub-frame (3), a section (38) for fixing to the vehicle chassis, and a connecting section (39) with dimensions made to match the dimensions of one or more models of chassis (40) of the vehicle to be fitted with the structure.

10. The structure according to any of the foregoing claims, wherein there are control means for the lifting means which can be controlled from the vehicle cab.

11. The structure according to any of the foregoing claims, wherein there are consent means for enabling operation of the rear or right/left side lifting means only when the corresponding rear or right/left side tipping pins have been correctly operated.

12. The structure according to any of the foregoing claims, comprising means for forced opening/closing of the rear wall and/or the side panels.

## Patentansprüche

1. Kipperaufbau (1) für Nutzfahrzeuge zur Güterbeförderung, bestehend aus:
- einer Pritsche (4), die sich in Längsrichtung im Wesentlichen im rechten Winkel zu einer Elevationsachse (b) des Kippers (2) erstreckt und ausgestattet ist mit hinteren Kippzapfen (12), die an der Heckseite der Pritsche angeordnet sind, und mit seitlichen Kippzapfen (11), die zumindest an einer Längsseite der Pritsche angeordnet sind;
- einer Vorderwand (5), die einteilig mit der Pritsche und im Wesentlichen parallel zu der Elevationsachse ausgeführt ist;
- Seitenwänden (8), die jeweils einen ersten Abschnitt (17) beinhalten, der an die Pritsche (4) angrenzt und relativ zu dieser nach oben angewinkelt ist, sowie zumindest einen zweiten Abschnitt (19), der an den ersten Abschnitt angrenzt und relativ zu diesem nach oben angewinkelt ist;
- einer Heckwand (7), die im Wesentlichen parallel zu der Elevationsachse ausgerichtet ist;
- ersten Hebeeinrichtungen (13), die zwischen einem unteren festen Punkt und einem Punkt des Kippers (2) wirken, der vor der Vorderwand angeordnet ist;
- zweiten Hebeeinrichtungen (13, 15, 16), die zwischen einem festen Punkt des Fahrzeuges und zumindest einem Punkt des Kippers wirken, der innerhalb der Pritsche (4) relativ zu den seitlichen Kippzapfen (11) angeordnet ist,
wobei zumindest eine der Seitenwände (8) scharnierbeweglich auf oberen Zapfen (10) gelagert ist und relativ zu der Pritsche (4) unter Verwendung von Verriegelungs-/Entriegelungsmitteln (22) aufgeklappt werden kann, die auf einer längsgerichteten Öffnungsachse (18) unterhalb der oberen Gelenkzapfen (10) angeordnet sind, und wobei die Heckwand (7) scharnierbeweglich auf oberen Zapfen (9) gelagert ist und relativ zu der Pritsche und den Seitenwänden unter Verwendung von Verriegelungs/Entriegelungsmittel (38) aufgeklappt werden kann; **dadurch gekennzeichnet, dass** der Aufbau einen Unterrahmen (3) beinhaltet, der die Pritsche (4) trägt, mit zumindest einem Zapfen (12) für das heckseitige Kippen der Pritsche ausgerüstet ist und Mittel (36) für seine stabile Befestigung an dem Fahrgestell (40) eines Fahrzeuges beinhaltet; wobei die zweiten Hebeeinrichtungen (15, 16) aus zumindest einem Hydraulikzylinder bestehen, der unterhalb und nahe des Hecks der Pritsche (4), außermittig in Bezug auf die mittlere Längsachse (a) der Pritsche angeordnet ist, wobei diese Zylinder ausziehbar sind und eingezogen innerhalb der vertikalen Ausdehnung des Unterrahmens (3) untergebracht sind.

2. Aufbau nach Anspruch 1, worin die Mittel (22) zur Verriegelung/Entriegelung der Seitenwand (8) eine längsgerichtete Bewegung zur Verriegelung/Entriegelung ausführen.

3. Aufbau nach Anspruch 2, worin die Mittel zur Verriegelung/Entriegelung einen oder mehrere Riegel (25) beinhalten, die durch eine längliche Betätigungsstange (23) betätigt werden, so dass sie bei Betätigung durch erste und zweite Aufnahmen (29, 30) geführt werden, die jeweils fest mit der Pritsche (4) beziehungsweise mit den Seitenwänden (8) verbunden sind.

4. Aufbau nach Anspruch 3, worin die Riegel einen Schieber (27) mit einem kegelförmigen Ende (28) aufweisen, um das Einführen in und Ausziehen aus entsprechenden Aufnahmen (30) zu begünstigen, die einen kegelstumpfförmigen Querschnitt aufweisen.

5. Aufbau nach Anspruch 3 oder 4, worin einer oder mehrere der Riegel (25) in einer Gleitaufnahme (31) gegen die Wirkung einer gegenwirkenden Feder (32) gleitend verschiebbar sind.

6. Aufbau nach einem der vorhergehenden Ansprüche, worin die Öffnungsachse (18) der Seitenwände zwischen zwei aneinander angrenzenden angewinkelten Abschnitten (17, 19) der Seitenwand (8) liegt.

7. Aufbau nach einem der vorhergehenden Ansprüche, worin in der geschlossenen Konfiguration der untere Seitenabschnitt (17) den daran angrenzenden oberen Seitenabschnitt (19) entlang der Öffnungsachse (18) überlappt, um den dichten Abschluss des Kippers für das transportierte Material zu gewährleisten.

8. Aufbau nach einem der vorhergehenden Ansprüche, worin die ersten Hebeeinrichtungen (13) aus zumindest einem Hydraulikzylinder bestehen, der vor dem Kipper (2) angeordnet ist.

9. Aufbau nach Anspruch 1, worin die Befestigungsmittel (36) Adapterplatten beinhalten, die aus einem Abschnitt (37) zur Befestigung an dem Unterrahmen (3), einem Abschnitt (38) zur Befestigung an dem Fahrgestell des Fahrzeugs und einem Verbindungsabschnitt (39) besteht, dessen Abmessungen auf die Abmessungen eines oder mehrerer Modelle von Fahrgestellen (40) des mit dem Aufbau auszurüstenden Fahrzeuges abgestimmt sind.

10. Aufbau nach einem der vorhergehenden Ansprüche, worin Steuereinrichtungen für die Hebeeinrichtungen vorgesehen sind, die von der Fahrzeugkabine aus gesteuert werden können.

11. Aufbau nach einem der vorhergehenden Ansprüche, worin Zustimmungseinrichtungen vorgesehen sind, um den Betrieb der heckseitigen oder rechts-/linksseitigen Hebeeinrichtungen nur dann freizugeben, wenn die entsprechenden Zapfen für den heckseitigen oder rechts-/linksseitigen Kippvorgang korrekt betätigt wurden.

12. Aufbau nach einem der vorhergehenden Ansprüche, der Einrichtungen für das zwangsgesteuerte Öffnen/Schließen der Heckwand und/oder der Seitenwände beinhaltet.

## Revendications

1. Une structure (1) de benne basculante pour véhicules de transport de marchandises, comprenant :
- une plate-forme (4) s'étendant longitudinalement, essentiellement à angle droit avec un axe d'élévation (b) de la benne (2), et équipée de pivots de basculement arrière (12) positionnés à l'arrière de la plate-forme et de pivots de basculement latéral (11) positionnés au moins au niveau d'un côté longitudinal de la plate-forme ;
- une paroi avant (5) faisant partie intégrante de la plate-forme et essentiellement parallèle à l'axe d'élévation ;
- des panneaux latéraux (8) comprenant chacun une première section (17) adjacente à la plate-forme (4) et inclinée vers le haut par rapport à celle-ci et au moins une deuxième section (19) adjacente et inclinée vers le haut par rapport à la première section ;
- une paroi arrière (7) essentiellement parallèle à l'axe d'élévation ;
- des premiers moyens de levage (13) agissant entre un point fixe inférieur et un point de la benne (2) situé devant la paroi avant ;
- des deuxièmes moyens de levage (13, 15, 16) opérant entre un point fixe du véhicule et au moins un point de la benne situé à l'intérieur de la plate-forme (4) par rapport aux pivots de basculement latéral (11),
au moins un des panneaux latéraux (8) étant articulé sur des broches supérieures (10) et pouvant s'ouvrir en abattant par rapport à la plate-forme (4) en utilisant des moyens de blocage/déblocage (22) positionnés au niveau d'un axe longitudinal d'ouverture (18) en dessous des broches supérieures (10) d'articulation, la paroi arrière (7) étant articulée sur des broches supérieures (9) et pouvant s'ouvrir en abattant par rapport à la plate-forme et aux panneaux latéraux grâce à des moyens de blocage/déblocage (38) ; ladite structure étant **caractérisée en ce qu'**elle comprend un sous-châssis (3) qui supporte la plate-forme (4), équipé d'au moins lesdits pivots (12) de basculement arrière de la plate-forme et comprenant des moyens (36) servant à le fixer de façon stable au châssis (40) d'un véhicule ; les deuxièmes moyens de levage (15, 16) consistant en au moins un vérin hydraulique positionné sous et à proximité de l'arrière de la plate-forme (4), décentré par rapport à l'axe longitudinal central (a) de la plate-forme, et étant des vérins extensibles et rétractables dans la dimension verticale du sous-châssis (3).

2. La structure selon la revendication 1, **caractérisée en ce que** les moyens (22) de blocage/déblocage des panneaux latéraux (8) ont un mouvement de blocage/déblocage longitudinal.

3. La structure selon la revendication 2, **caractérisée en ce que** les moyens de blocage/déblocage comprennent un ou plusieurs verrous (25) actionnés par une tige de commande longitudinale (23) de manière à ce qu'ils passent, sur commande, à travers des premier et deuxième logements (29, 30) faisant respectivement partie intégrante de la plate-forme (4) et des panneaux (8).

4. La structure selon la revendication 3, **caractérisée en ce que** les verrous ont une tige coulissante (27) à extrémité conique (28) pour faciliter l'insertion dans et l'extraction de logements (30) correspondants ayant une section troncoconique.

5. La structure selon la revendication 3 ou 4, **caractérisée en ce qu'**un ou plusieurs des verrous (25) peuvent coulisser dans un logement (31) de coulissement contre l'action d'un ressort antagoniste (32).

6. La structure selon l'une quelconque des revendications précédentes, **caractérisée en ce que** l'axe d'ouverture (18) des panneaux latéraux est situé entre deux sections inclinées (17, 19) adjacentes du panneau latéral (8).

7. La structure selon l'une quelconque des revendications précédentes, **caractérisée en ce que** dans la configuration fermée la section latérale inférieure (17) chevauche la section latérale supérieure (19) adjacente le long de l'axe d'ouverture (18), garantissant ainsi l'étanchéité de la benne pour le matériau transporté.

8. La structure selon l'une quelconque des revendications précédentes, **caractérisée en ce que** les premiers moyens de levage (13) consistent en au moins un vérin hydraulique positionné à l'avant de la benne (2).

9. La structure selon la revendication 1, **caractérisée en ce que** les moyens de fixation (36) comprennent des plaques d'adaptation consistant en une section (37) de fixation au sous-châssis (3), une section (38) de fixation au châssis du véhicule, et une section de raccordement (39) dont les dimensions correspondent aux dimensions d'un ou de plusieurs modèles de châssis (40) du véhicule devant être équipé de la structure.

10. La structure selon l'une quelconque des revendications précédentes, **caractérisée en ce qu'**il y a des moyens de commande pour les moyens de levage, qui peuvent être commandés depuis la cabine du véhicule.

11. La structure selon l'une quelconque des revendications précédentes, **caractérisée en ce que** des moyens d'autorisation sont prévus pour habiliter le fonctionnement des moyens de levage arrière ou latéral droit/gauche uniquement quand les pivots correspondants de basculement arrière ou latéral droit/gauche ont été correctement actionnés.

12. La structure selon l'une quelconque des revendications précédentes, **caractérisée en ce qu'**elle comprend des moyens pour l'ouverture/fermeture forcée de la paroi arrière et/ou des panneaux latéraux.
